# EUROPÄISCHE PATENTSCHRIFT

(11) **EP 0 679 230 B1**
(45) Veröffentlichungstag und Bekanntmachung des Hinweises auf die Patenterteilung: **11.09.1996**
(21) Anmeldenummer: 94903777.4
(22) Anmeldetag: 15.12.1993
(51) Int. Cl.: F16C 39/06

(54) **MAGNETLAGERZELLE MIT ROTOR UND STATOR**
MAGNETIC BEARING CELL WITH ROTOR AND STATOR
CELLULE DE PALIER MAGNETIQUE MUNIE D'UN ROTOR ET D'UN STATOR

(30) Priorität: 16.01.1993 DE 4301076
(43) Veröffentlichungstag der Anmeldung: 02.11.1995
(73) Patentinhaber: LEYBOLD AKTIENGESELLSCHAFT, D-63450 Hanau (DE); FORSCHUNGSZENTRUM JÜLICH GMBH, D-52425 Jülich (DE)
(72) Erfinder: FREMEREY, Johan, K., D-53129 Bonn (DE); SCHNEIDER, Helmut, D-53909 Zülpich (DE); REIMER, Peter, D-50354 Hürth (DE); HODAPP, Josef, D-53879 Euskirchen (DE)
(74) Vertreter: Leineweber, Jürgen, Dipl.-Phys.
(86) Internationale Anmeldenummer: EP9303540
(87) Internationale Veröffentlichungsnummer: WO9416235

(56) Entgegenhaltungen:
- EP-A- 0 155 624
- EP-A- 0 332 979
- EP-A- 0 467 341
- DE-A- 4 106 063

## Beschreibung

Die Erfindung bezieht sich auf eine rotationssymmetrisch aufgebaute Magnetlagerzelle mit einem Rotor, der um die zentrale Achse der Zelle drehbar angeordnet ist und der eine Welle sowie mindestens zwei auf der Welle mit axialem Abstand befestigte, axial magnetisierte Permanentmagnetringe aufweist, sowie mit einem Stator, der Polbauteile und zwei Ringspulen aufweist, die dem Rotor jeweils stirnseitig zugeordnet sind, wobei die Rotor- und Statorbauteile derart zueinander angeordnet sind, daß die Permanentmagneten einen die zentrale Achse toroidal umgebenden, die Ringspulen einschließenden Magnetfluß erzeugen.

Aus der DE-C-34 09 047 ist eine Magnetlagerzelle mit diesen Merkmalen bekannt. Ihr Rotor weist zwei axial magnetisierte Permanentmagnetringe auf, die den die zentrale Achse toroidal umgebenden, die Ringspulen einschließenden Magnetfluß erzeugen. Der Magnetfluß durchsetzt die axial hintereinander angeordneten Permanentmagnetringe des Rotors sowie die äußeren Polbauteile, so daß eine hohe Radialsteifigkeit erzielt wird. In axialer Richtung ist das Lager instabil und benötigt deshalb in Bezug auf diese Richtung eine aktive Regelung. Dazu sind die dem Rotor jeweils stirnseitig zugeordneten Ringspulen vorhanden. Jede dieser Ringspulen erzeugt ebenfalls einen die zentrale Achse umgebenden toroidalen Magnetfluß, der sich dem von den Permanentmagnetringen erzeugten Magnetfluß überlagert. Die Regelung ist vorzugsweise derart gewählt, daß die Ringspulen stromlos sind, wenn der Rotor seine Sollage hat. Weicht der Rotor in axialer Richtung von seiner Sollage ab, dann werden die Ringspulen mit Strom versorgt. Die Stromstärke und die Stromrichtung hängen von der Größe und von der Richtung der Abweichung ab. Der von den Ringspulen erzeugte, toroidale Magnetfluß ist je nach Stromrichtung dem von den Permanentmagnetringen erzeugten Magnetfluß entweder gleich- oder entgegengesetztgerichtet.

Um die Radialsteifigkeit eines Magnetlagers der beschriebenen Art zu verbessern, wurde vorgeschlagen, die Anzahl der Permanentmagnetringe des Rotors zu erhöhen und zusätzlich mindestens einen Stator-Permanentmagnetring, ebenfalls axial magnetisiert, vorzusehen (vgl. DE-A-41 06 063). Diese Maßnahmen verstärken den von den Permanentmagneten erzeugten Magnetfluß, vergrößern also die axialen Kräfte und bewirken damit die gewünschte Verbesserung der Radialsteifigkeit. Um ihre Regelaufgaben erfüllen zu können, müssen die Ringspulen in der Lage sein, Regelflüsse zu erzeugen, die die erhöhten Axialkräfte kompensieren. Dieses setzt eine Vergrößerung des Querschnittes der Ringspulen sowie eine Vergrößerung des Aufwandes für die Spulenstromerzeugung und -regelung voraus.

Der vorliegenden Erfindung liegt die Aufgabe zugrunde, eine Magnetlagerzelle der eingangs erwähnten Art derart zu gestalten, daß trotz einer Verbesserung der Radialsteifigkeit durch Erhöhung der Anzahl der Permanentmagnetringe ein erhöhter Aufwand für die aktive Regelung nicht erforderlich ist.

Erfindungsgemäß wird diese Aufgabe dadurch gelöst, daß den beiden jeweils axial außen gelegenen Permanentmagnetringen in ihren peripheren Bereichen Polbauteile aus magnetisch gut leitendem Material zugeordnet sind, die eine Bündelung des von den Ringspulen erzeugten Magnetflusses zu zwei im wesentlichen unabhängigen Magnetflußkreisen bewirken.

Die vorgeschlagenen Maßnahmen begünstigen die Ausbildung von unmittelbar den Ringspulen zugeordneten Regelflüssen. Sie bewirken, daß die von den beiden Ringspulen erzeugten, im wesentlichen voneinander unabhängigen Magnetflüsse nur die die Ringspulen jeweils umgebenden Polbauteile, einen Teil des benachbarten Permanentmagnetringes sowie jeweils einen axialen und einen peripheren Spalt zwischen Rotor und Stator durchsetzen. Große Widerstände sind deshalb in diesen Magnetflußkreisen nicht vorhanden. Die maßgeblich zur axialen Regelung des Magnetfeldes beitragenden Magnetflüsse müssen nicht mehr die weiteren noch vorhandenen Bauteile (Permanentmagneten, Dämpfungsscheiben) und Spalte durchsetzen. Der für die Ringspulen notwendige Aufwand - Baugröße, Stromversorgung - hängt deshalb nicht mehr von der Anzahl der vorhandenen Permanentmagnetringe ab.

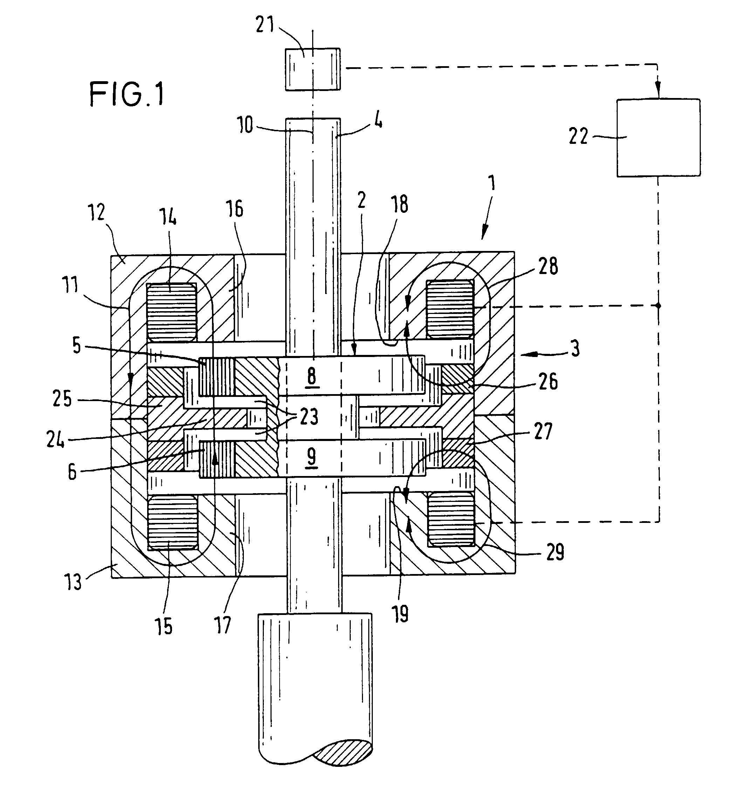

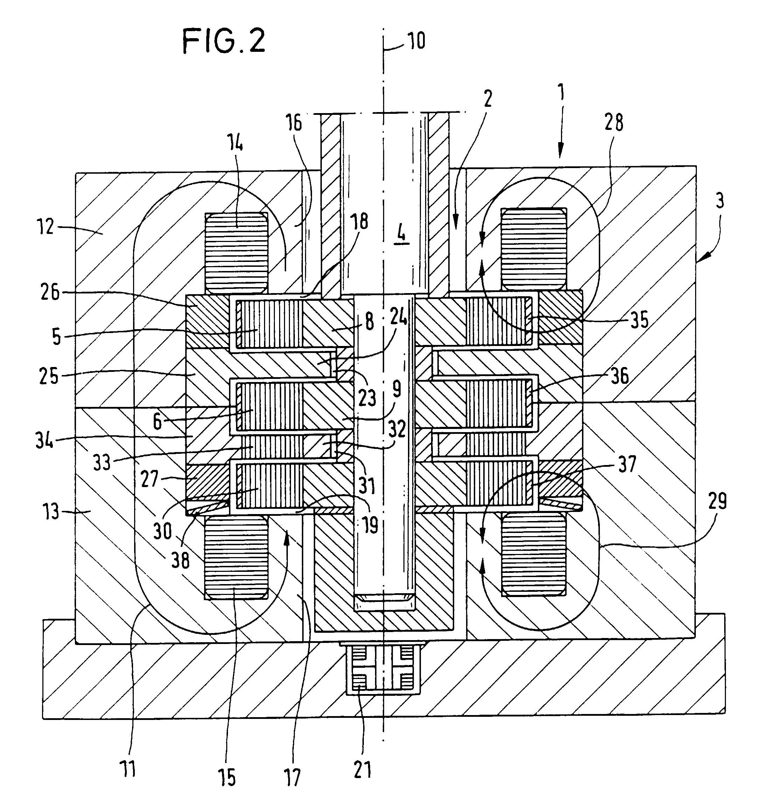

Weitere Vorteile und Einzelheiten der Erfindung sollen anhand von in den Figuren 1 und 2 dargestellten Ausführungsbeispielen erläutert werden. Es zeigen
- Figur 1 eine Magnetlagerzelle mit zwei Permanentmagnetringen und
- Figur 2 eine Magnetlagerzelle mit vier Permanentmagnetringen.

Die in der Figur 1 dargestellte Magnetlagerzelle 1 umfaßt den Rotor 2 und den Stator 3.

Bestandteile des Rotors 2 sind die Welle 4 und die auf der Welle 4 befestigten Permanentmagnetringe 5 und 6. Zur Befestigung der Permanentmagnetringe 5, 6 auf der Welle 4 sind innere Nabenringe 8, 9 vorgesehen. Der von den Permanentmagnetringen 5, 6 erzeugte, die zentrale Achse 10 toroidal umgebende Magnetfluß ist mit dem Pfeil 11 angedeutet.

Der Stator 3 umfaßt rotationssymmetrisch zur zentralen Achse 10 gestaltete Polbauteile 12, 13, deren gemeinsamer Querschnitt im wesentlichen C-förmig ist. Im stirnseitigen Bereich des C befinden sich die Ringspulen 14, 15. Die inneren Abschnitte 16, 17 bilden den Permanentmagnetringen 5, 6 des Rotors 2 zugewandte Polflächen 18, 19. Zur Steuerung des Stromdurchganges durch die Ringspulen 14, 15 sind ein Sensorsystem 21 sowie ein als Block dargestellter elektronischer Regler 22 vorgesehen.

In den Spalt 23 zwischen den Permanentmagnetringen 5 und 6 greift die Ringscheibe 24 ein, die aus nicht magnetisierbarem Material hoher elektrischer Leitfähigkeit, beispielsweise Kupfer besteht. Die Ringscheibe 24 weist peripher einen zylindrischen Abschnitt 25 auf, der den Bauteilen 12, 13 von innen anliegt. Bei im wesentlichen axial gerichteten Relativbewegungen werden in der Ringscheibe 24 und auch im zylindrischen Abschnitt 25 Wirbelströme erzeugt, die die gewünschte dämpfende Wirkung haben. Der zylindrische Abschnitt 25 hat Zentrierfunktion und erleichtert darüberhinaus die Abfuhr der durch die Wirbelströme entstehenden Wärme.

Den Permanentmagnetringen 5, 6 sind peripher weitere Statorbauteile 26, 27 zugeordnet, die als die Permanentmagnetringe 5, 6 umgebende Statorringe ausgebildet sind. Sie bestehen aus magnetisch gut leitendem Werkstoff und bewirken, daß die Ringspulen 14, 15 - im Gegensatz zum Magnetflußkreis 11, erzeugt von den Permanentmagnetringen 5, 6 - zwei Magnetflußkreise 28, 29 erzeugen.

Beim Ausführungsbeispiel nach Figur 2 sind drei rotierende, axial magnetisierte Permanentmagnetringe 5, 6 und 30 vorgesehen. In den Spalt 31 zwischen den Permanentmagnetringen 6 und 30 ragt eine Ringscheibe 32 hinein, die einen weiteren, ruhenden Permanentmagnetring 33 trägt. Die radialen Abmessungen dieses Stator-Permanentmagnetringes 33 entsprechen den Abmessungen der Rotorpermanentmagnetringe 6 und 30. Im übrigen besteht die Scheibe 32 aus nicht magnetisierbarem Material (z.B. Edelstahl) und weist ebenfalls peripher den zylindrischen Abschnitt 34 auf, der dem Bauteil 13 zum Zwecke der Zentrierung von innen anliegt. Hat das Material zusätzlich eine hohe elektrische Leitfähigkeit, dann trägt es zur Verbesserung der Dämpfungseigenschaften bei.

Die Magnetringe 5, 6, 30, 33 sind derart in axialer Richtung magnetisiert, daß sie einander anziehende Kräfte ausüben. Zusammen mit den Polbauteilen 12, 13, 16, 17 bilden sie einen Magnetkreis (Pfeil 11), der für die radiale Steifigkeit maßgebend ist. Äußere Armierungsringe 35, 36, 37 umfassen die rotierenden Permanentmagnetringe und schützen sie vor einer Zerstörung bei der Einwirkung der relativ hohen Fliehkräfte während der Rotation.

Den äußeren Permanentmagnetringen 5 und 30 sind peripher die Statorringe 26, 27 zugeordnet, welche die gewünschte Aufteilung der von den Ringspulen 14, 15 erzeugten Magnetfelder in zwei separate Magnetflüsse (Pfeile 28, 29) bewirken. Sind in den Bereichen der Statorringe 26, 27 Tellerfedern 38 oder Tellerfederpakete erforderlich, um die verschiedenen Ringbauteile 25, 26, 27, 34 gegenseitig zu verspannen, dann ist es zweckmäßig, Tellerfedern aus magnetisch gut leitendem Werkstoff vorzusehen. Diese können einen Statorring 26 oder 27 ersetzen oder zusätzlich vorhanden sein.

## Patentansprüche

1. Rotationssymmetrisch aufgebaute Magnetlagerzelle (1) mit einem
- Rotor (2), der um die zentrale Achse (10) der Zelle (1) drehbar angeordnet ist und der eine Welle (4) sowie mindestens zwei auf der Welle mit axialem Abstand befestigte, axial magnetisierte Permanentmagnetringe (5, 6, 30) aufweist,
sowie mit einem
- Stator (3), der Polbauteile (12, 13, 16, 17) und zwei Ringspulen (14, 15) aufweist, die dem Rotor jeweils stirnseitig zugeordnet sind,
wobei die Rotor- und Statorbauteile derart zueinander angeordnet sind, daß die Permanentmagneten (5, 6, 30) einen die zentrale Achse (10) toroidal umgebenden, die Ringspulen (14, 15) einschließenden Magnetfluß (11) erzeugen,
dadurch gekennzeichnet,
daß den beiden jeweils axial außen gelegenen Permanentmagnetringen (5, 6 bzw. 5, 30) in ihren peripheren Bereichen Polbauteile (26, 27, 38) aus magnetisch gut leitendem Material zugeordnet sind, die eine Bündelung des von den Ringspulen (14, 15) erzeugten Magnetflusses zu zwei im wesentlichen unabhängigen Magnetflußkreisen (28, 29) bewirken.

2. Magnetlagerzelle nach Anspruch 1, dadurch gekennzeichnet, daß die Permanentmagnetringe (5, 6 bzw. 5, 30) von Statorringen (26, 27) als Polbauteile unmittelbar umgeben sind.

3. Magnetlagerzelle nach Anspruch 2, dadurch gekennzeichnet, daß zusätzlich oder anstelle eines Statorringes (26, 27) eine oder mehrere Tellerfedern (38) aus magnetisch gut leitendem Werkstoff vorhanden sind.

## Claims

1. Rotationally symmetric magnetic bearing cell (1) having a
- rotor (2), which is disposed rotatably about the central axis (10) of the cell (1) and comprises a shaft (4) as well as at least two axially magnetized permanent-magnet rings (5, 6, 30), which are fastened at an axial distance from one another on the shaft,
as well as having a
- stator (3), which comprises pole components (12, 13, 16, 17) and two ring coils (14, 15) which are each associated with an end face of the rotor,
the rotor and stator components being so disposed relative to one another that the permanent magnets (5, 6, 30) generate a magnetic flux (11), which toroidally surrounds the central axis (10) and encloses the ring coils (14, 15),
characterized in that
associated with the two, in each case, axially outerlying permanent-magnet rings (5, 6 or 5, 30) in their peripheral regions are pole components (26, 27, 38) made of highly permeable material, which effect a concentration of the magnetic flux generated by the ring coils (14, 15) into two substantially independent magnetic flux circuits (28, 29).

2. Magnetic bearing cell according to claim 1, characterized in that the permanent-magnet rings (5, 6 or 5, 30) are directly surrounded by stator rings (26, 27) as pole components.

3. Magnetic bearing cell according to claim 2, characterized in that, in addition to or instead of a stator ring (26, 27), one or more cup springs (38) made of highly permeable material are provided.

## Revendications

1. Cellule de palier magnétique (1) ayant une construction à symétrie de révolution et comprenant
- un rotor (2) disposé rotatif autour de l'axe central (10) de la cellule (1) et possédant un arbre (4) ainsi qu'au moins deux aimants permanents en forme d'anneaux (5, 6, 30) aimantés axialement et fixés axialement à distance l'un de l'autre sur l'arbre,
- de même qu'un stator (3) possédant des pièces polaires (12, 13, 16, 17) et deux bobines annulaires (14, 15) qui sont coordonnées chacune à une extrémité respective du rotor,
les pièces du rotor et du stator étant disposées les unes par rapport aux autres, de manière que les aimants permanents (5, 6, 30) produisent un flux magnétique (11) entourant l'axe central (10) à la façon d'un tore et renfermant les bobines annulaires (14, 15),
caractérisée en ce que
des pièces polaires (26, 27, 38), en matériau conduisant bien le flux magnétique, sont coordonnées aux parties périphériques des deux aimants permanents en forme d'anneaux (5, 6 ou 5, 30) situés axialement à l'extérieur, pièces polaires qui provoquent une concentration du flux magnétique produit par les bobines annulaires (14, 15) en deux circuits magnétiques (28, 29) essentiellement indépendants.

2. Cellule de palier magnétique selon la revendication 1, caractérisée en ce que les aimants permanents en forme d'anneaux (5, 6 ou 5, 30) sont entourés directement d'anneaux statoriques (26, 27) constituant des pièces polaires.

3. Cellule de palier magnétique selon la revendication 2, caractérisée en ce qu'une rondelle-ressort ou plusieurs rondelles-ressorts (38), en matériau conduisant bien le flux magnétique, est prévue ou sont prévues en plus ou à la place d'un anneau statorique (26, 27).
